(19) **Europäisches Patentamt**

**European Patent Office**

**Office européen des brevets**

(11) **EP 1 645 892 A1**

(12) **EUROPEAN PATENT APPLICATION**
published in accordance with Art. 158(3) EPC

(43) Date of publication:
**12.04.2006 Bulletin 2006/15**

(21) Application number: **04746396.3**

(22) Date of filing: **18.06.2004**

(51) Int Cl.:
***G02B 5/08*** (1968.09)

(86) International application number:
**PCT/JP2004/008927**

(87) International publication number:
**WO 2004/113969 (29.12.2004 Gazette 2004/53)**

(84) Designated Contracting States:
**AT BE BG CH CY CZ DE DK EE ES FI FR GB GR HU IE IT LI LU MC NL PL PT RO SE SI SK TR**

(30) Priority: **19.06.2003 JP 2003174286**
**19.12.2003 JP 2003423025**

(71) Applicant: **Yupo Corporation**
**Tokyo 101-0062 (JP)**

(72) Inventors:
• **UEDA, Takahiko,**
**c/o YUPO CORPORATION**
**Kashima-gun, Ibaraki 3140102 (JP)**

• **KOYAMA, Hiroshi,**
**c/o YUPO CORPORATION**
**Kashima-gun, Ibaraki 3140102 (JP)**

• **TAKAHASHI, Tomotsugu,**
**c/o YUPO CORPORATION**
**Chiyoda-ku, Tokyo 1010062 (JP)**

(74) Representative: **Zimmermann, Gerd Heinrich et al**
**Zimmermann & Partner,**
**P.O. Box 33 09 20**
**80069 München (DE)**

(54) **LIGHT-REFLECTING BODY AND SURFACE LIGHT SOURCE USING SAME**

(57)    A light reflector having a laminate film that comprises a substrate layer (A) containing a thermoplastic resin and a filler and stretch in at least one direction to have an areal draw ratio of from 1.3 to 80 times and a thermoplastic resin-containing layer (B), wherein the light reflector has a whole ray reflectance of at least 95% and a surface strength of at least 250 g. The light reflector has good optical properties and good workability in that, when stuck to various plates and shaped, it hardly looses, drops and peels from the substrate plates.

Fig.2

EP 1 645 892 A1

**Description**

TECHNICAL FIELD

The present invention relates to a light reflector which is useful as a light-reflecting member for light reflector sheets for use in planar light source devices and for other reflectors and various lighting instruments, and which is hardly scratched and damaged on its surface even when worked variously and therefore has good workability.

BACKGROUND ART

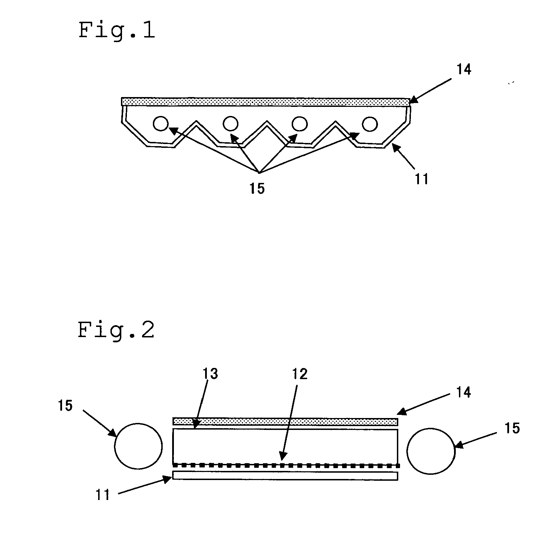

Backlight-type liquid-crystal displays with a built-in light source therein have been much popularized. Of such backlight-type built-in light sources, a typical structure of an underlight-type backlight comprises a housing 11 that serves both as a profile case and as a light reflector, a diffuser 14, and a light source 15 such as a cold-cathode lamp, as in Fig. 1. A typical structure of a sidelight-type backlight comprises a light waveguide with a dot print 12 on a transparent acrylic plate 13, a light reflector 11, a diffuser 14, and a light source 15 such as cold-cathode lamp, as in Fig. 2. In these, the light from the light source is reflected on the light reflector, and forms uniform planar light though the diffuser. Recently, some improvements have been made in these by increasing the power of the lighting source and by increasing the number of the light source lamps therein. For increasing the brightness of these devices with upsizing of displays, plural light sources may be disposed, as in Fig. 1 and Fig. 2.

Heretofore, white polyester films have been much used for light reflectors for those applications (e.g., JP-A 4-239540). These days however, light reflectors comprising a white polyester film are often problematic because of their discoloration (yellowing) owing to the increase in luminous energy and to the increase in atmospheric temperatures by the heat from lamps, and therefore hardly-discoloring materials have become desired.

Recently, therefore, a light reflector comprising a white polyolefin film has been proposed (e.g., JP-A 6-298957, 2002-31704). The light reflector comprising a white polyolefin film is more hardly discolored, as compared with the light reflector comprising a white polyester film (e.g., JP-A 8-262208, WO03/014778), but on the other hand, the former is problematic in that, when it is stuck to a metal or any other sheet material and shaped and worked variously, then the stuck part may be broken, loosed and dropped away. In addition, it has become clear that, even when a protective tape for surface protection is used as the case may be, there may still occur a problem in that the surface of the white polyolefin film may be peeled off owing to the adhesive force of the tape.

With popularization of upsized displays, there is increasing the demand for display brightness increase, and conventional white polyester films and white polyolefin films are unsatisfactory, and light reflectors that give higher brightness are desired.

An object of the invention is to provide a light reflector which has good optical properties and which, when stuck to various plates and shaped, is free from troubles of loosing, dropping and peeling from the plates and therefore has good workability.

SUMMARY OF THE INVENTION

The above object is attained by a light reflector of the invention, which has a laminate film comprising (A) a substrate layer that contains a thermoplastic resin and a filler and is stretched in at least one direction to have an areal draw ratio of from 1. 3 to 80 times and (B) a thermoplastic resin-containing layer, and which has a whole ray reflectance of at least 95% and has a surface strength of at least 250 g.

Preferably, the scattering coefficient, S, represented by the equation (1), of the light reflector of the invention is at least 0.5.

$$\text{Scattering Coefficient } S = (100 \times R1)/[(100 - R1) \times T_A \times P] \quad (1)$$

wherein R1 represents the reflectance of the light reflector at a wavelength of 550 nm; $T_A$ represents the thickness of the substrate layer (A) [ unit, $\mu$m]; and P represents the porosity [unit, %] represented by the equation (2):

$$\text{Porosity } P = [(\rho0 - \rho)/\rho0] \times 100 \quad (2)$$

wherein ρ0 indicates the true density of the laminate film, and ρ indicates the density of the laminate film.

The light reflector of the invention has good optical properties, and, when stuck to various plates and shaped, it is free from troubles of loosing, dropping and peeling from the plates and therefore has good workability. In particular, the optical reflector which the invention provides ensures good brightness with no brightness unevenness, and its brightness level is especially high.

BRIEF DESCRIPTION OF THE DRAWINGS

Fig. 1 is a cross-sectional view showing a structure of an underlight-type backlight.
Fig. 2 is a cross-sectional view showing a structure of a sidelight-type backlight.

In the drawings, 11 is a light reflector (housing), 12 is a white dot print for reflection, 13 is an acrylic plate (light waveguide), 14 is a diffuser sheet, 15 is a cathode-ray lamp.

DETAILED DESCRIPTION OF THE INVENTION

The constitution and the advantages of the light reflector of the invention are described in detail hereinunder. In this description, the numerical range expressed by the wording "a number to another number" means the range that falls between the former number indicating the lowermost limit of the range and the latter number indicating the uppermost limit thereof.

[Substrate Layer (A)]

Thermoplastic Resin

The type of the thermoplastic resin for use in the substrate layer (A) in the invention is not specifically defined. The thermoplastic resin (A) for use in the substrate film includes ethylene-based resins such as high-density polyethylene, middle-density polyethylene, low-density polyethylene; other polyolefin-based resins such as propylene-based resin, polymethyl-1-pentene, ethylene-cyclic olefin copolymer; polyamide-based resins such as nylon-6, nylon-6,6, nylon-6,10, nylon-6,12; thermoplastic polyester-based resins such as polyethylene terephthalate and its copolymers, polyethylene naphthalate, aliphatic polyesters; and other thermoplastic resins such as polycarbonate, atactic polystyrene, syndiotactic polystyrene, polyphenylene sulfide. Two or more of these may be combined for use herein.

Of those, preferred are polyolefin-based resins in view of their chemical resistance and production cost; and more preferred are propylene-based resins.

The propylene-based resins include propylene homopolymers, and propylene-based copolymers with α-olefin such as ethylene, 1-butene, 1-hexene, 1-heptene, 4-methyl-1-pentene or the like. The stereospecificity of the resins is not specifically defined. The resins may be isotactic or syndiotactic, and may have any desired degree of stereospecificity. The copolymers may be binary, ternary or quaternary ones, and may be random copolymers or block copolymers.

Preferably, the content of the thermoplastic resin of the type in the substrate layer (A) is from 25 to 95% by weight, more preferably from 30 to 90% by weight of the layer. The thermoplastic resin content of at least 25% by weight in the substrate layer (A) may prevent surface scratches in stretching and forming the laminate film mentioned below, and the resin content of at most 90% by weight may readily provide a satisfactory degree of porosity of the film.

Filler

For the filler to be in the substrate layer (A) of the invention along with the thermoplastic resin therein, usable are various inorganic fillers or organic fillers.

The inorganic filler includes heavy calcium carbonate, precipitated calcium carbonate, calcined clay, talc, titanium oxide, barium sulfate, aluminium sulfate, alumina, silica, zinc oxide, magnesium oxide, diatomaceous earth. Various surface-treated products of the above-mentioned inorganic fillers that are surface-treated with various surface-treating agents may also be used in the invention. Above all, heavy calcium carbonate, precipitated calcium carbonate and their surface-treated products, as well as clay and diatomaceous earth are desirable, since they are inexpensive and since the films containing them may be readily stretched to have pores formed therein. More preferred are surface-treated products of heavy calcium carbonate and precipitated calcium carbonates that are surface-treated with various surface-treating agents. For example, the surface-treating agents are preferably resin acids, fatty acids, organic acids, sulfate-type anion surfactants, sulfonic acid-type anionic surfactants, petroleum resin acids, their sodium potassium and ammonium salts, or their fatty acid esters, resinates, wax and paraffin. Also preferred are nonionic surfactants, dienic polymers, titanate-type coupling agents, silane-type coupling agents, phosphoric acid-type coupling agents. The sulfate-type anionic surfactants are, for example, long-chain alcohol sulfates, polyoxyethylene alkyl ether sulfates, sulfated oil, as well as their sodium and potassium salts; the sulfonic acid-type anionic surfactants include, for example, alkylbenzenesulfonic acids, alkylnaphthalenesulfonic acids, paraffinsulfonic acids, α-olefinsulfonic acids, alkylsulfosuccinic acids, as well as their sodium and potassium salts. The fatty acids include, for example, caproic acid, caprylic acid, pelargonic acid, capric acid, undecanoic acid, lauric acid, myristic acid, palmitic acid, stearic acid, behenic acid, oleic acid, linolic acid, linolenic acid, eleostearic acid. The organic acids include, for example, maleic acid, sorbic acid; the dienic polymers include, for example, polybutadiene, isoprene; the nonionic surfactants include polyethylene glycol ester-type surfactants. One or more of these surface-treating agents may be used herein either singly or as combined. For surface-treating inorganic fillers with these surface-treating agents, for example, referred to are the method described in JP-A 5-43815, 5-139728, 7-300568, 10-176079, 11-256144, 11-349846, 2001-158863, 2002-220547, 2002-363443.

The organic filler for use herein has a melting point or a glass transition point (for example, falling between 120 and 300°C) higher than the melting point or the glass transition point of the thermoplastic resin to be used for the film. Its examples are polyethylene terephthalate, polybutylene terephthalate, polyamide (e.g., nylon-6, nylon-6,6), polycarbonate, polyethylene naphthalate, polystyrene, melamine resin, cyclic olefin homopolymer, cyclic olefin-ethylene copolymer, polyethylene sulfite, polyimide, polyethyl ether ketone, polyphenylene sulfite. Above all, preferred are organic fillers that have a melting point or a glass transition temperature higher than that of the polyolefin-based resin used herein and are non-miscible with the resin.

Either singly or as combined, one or more selected from the above-mentioned inorganic fillers and organic fillers may be in substrate layer (A). When two or more are selected and combined to be in the layer, the organic filler and the inorganic filler may be mixed.

The mean particle size of the inorganic filler and the mean dispersed particle size of the organic filler may be determined, for example, through observation of the primary particle size thereof according to a Microtrack method or with a scanning electronic microscope (in the invention, the mean value of 100 particles is the mean particle size thereof), or through conversion from the specific surface area thereof (in the invention, Shimadzu's powder specific surface area meter, SS-100 is used to determine the specific surface area of filler particles).

For suitably controlling the size of the pores to be formed in the laminate film by stretching and forming it as mentioned below, it is desirable that the mean particle size of the inorganic filler or the mean dispersed particle size of the organic filler to be in the film is from 0.05 to 1.5 μm, more preferably from 0.1 to 1 μm. If the mean particle size or the mean dispersed particle size is 1.5 μm or less, then more uniform pores may be formed in the film. In addition, if the mean particle size or the mean dispersed particle size is 0.05 μm or more, then the predetermined pores will be easier to form in the film.

For suitably controlling the amount of the pores to be formed in the laminate film by stretching and forming it as mentioned below, the filler content of the oriented film is preferably from 5 to 75% by weight, more preferably from 10 to 70% by weight. The filler content of at least 5% by weight may readily provide a satisfactory degree of porosity of the film, and the filler content of at most 75% by weight may prevent surface scratches in the film. Other Ingredients

When the main resin to constitute the substrate layer (A) is a propylene-based resin, then a resin having a lower melting point than that of the propylene-based resin, such as polyethylene or ethylene-vinyl acetate may be added to the resin in an amount of from 3 to 25% by weight for the purpose of improving the stretchability of resin film.

The substrate layer (A) in the invention may have a single-layered structure or a multi-layered structure. The thickness of the substrate layer (A) is preferably from 30 to 500 μm, more preferably from 40 to 400 μm, even more preferably from 50 to 300 μm.

[Thermoplastic Resin-Containing Layer (B)]

The thermoplastic resin-containing layer (B) may be formed on one face or both faces of the substrate layer (A).

For forming the layer (B), herein employable are a method of co-extruding the melt material for the layer (B) through a multi-layer T-die or I-die before the stretching formation of the substrate layer (A), and stretching and forming the resulting laminate; when the substrate layer (A) is biaxially stretched, a method of extruding a melt material for the layer (B) onto the monoaxially-stretched film for the layer (A) and sticking them together, and monoaxially stretching and forming the resulting laminate; and a method of stretching and forming the substrate layer (A), and then a starting resin for the layer (B) is extruded onto it either directly or via an adhesive layer therebetween and sticking them together.

In the layer (B), the same thermoplastic resin as in the substrate layer (A) may be used. The layer (B) may also contain the above-mentioned filler, and the amount of the filler therein may be less than 5% by weight.

When the layer (B) does not contain a filler, then it preferably contains from 40 to 60% by weight of a propylene-based resin and from 40 to 60% by weight of high-density polyethylene since the glossiness of the laminate film may be controlled to be from 70 to 86% and a light reflector that ensures good brightness may be obtained.

Preferably, the thickness of the layer (B) is at least 2 $\mu$m, more preferably from 2 to 80 $\mu$m, even more preferably from 2.5 to 60 $\mu$m. When the thickness is at least 2 $\mu$m, then the film may readily have a surface strength of at least 250 g and may have desired workability.

[Laminate Film]

Additive

If desired, the laminate film of the invention may contain fluorescent brightener, heat stabilizer, light stabilizer, dispersant, lubricant. The heat stabilizer may be a steric-hindered phenol-type, or phosphorus-containing, or amine-type stabilizer, and its content may be from 0.001 to 1% by weight. The light stabilizer may be a steric-hindered amine-type, or benzotriazole-type, or benzophenone-type light stabilizer, and its content may be from 0.001 to 1% by weight. The inorganic filler dispersant may be a silane-coupling agent, a higher fatty acid such as oleic acid or stearic acid, metal soap, polyacrylic acid, polymethacrylic acid or their salt, and its content may be from 0.01 to 4% by weight.

Shaping

For shaping the laminate film, employable is any ordinary monoaxially-stretching or biaxially-stretching method. Concretely, herein employable is a monoaxial-stretching method that comprises sheetwise extruding resin melt(s) through a single-layer or multi-layer T-die or I-die connected to a screw extruder, and then monoaxially stretching the resulting sheet in a mode of machine-direction stretching to be attained by utilizing the peripheral speed difference between multiple rolls; or a biaxial-stretching method that comprises a combination of the same step as in the monoaxial-stretching method and an additional step of cross-direction stretching to be attained in a tenter oven; or a simultaneous biaxial-stretching method to be attained by a combination of a tenter oven and a linear motor.

The stretching temperature is lower by 2 to 60°C than the melting point of the thermoplastic resin used, but is higher by 2 to 60°C than the glass transition point of the resin. When the resin is propylene homopolymer (melting point, 155 to 167°C) , then the stretching temperature preferably falls between 95 and 165°C; when it is polyethylene terephthalate (glass transition point, about 70°C), then the temperature preferably falls between 100 and 130°C; and when it is a cyclic polyolefin-based resin (glass transition point, 120°C), then the temperature preferably falls between 122 and 180°C. The pulling rate for the stretching preferably falls between 20 and 350 m/min.

Thus obtained, the laminate film may be optionally heat-treated (annealed) for promoting the crystallization thereof and for reducing the thermal shrinkage of the laminate film.

For suitably controlling the size of the pores to be formed in the laminate film, the areal draw ratio of the substrate layer (A) preferably falls between 1.3 and 80 times, more preferably between 7 and 70 times, even more preferably between 22 and 65 times, most preferably between 25 and 60 times. The areal draw ratio falling between 1.3 and 80 times readily forms fine pores in the film, not lowering the reflectance of the film.

For suitably controlling the amount of the pores to be formed in the laminate film of the invention, per the unit volume of the film, the degree of porosity of the film is preferably from 15 to 60%, more preferably from 20 to 55%. The "porosity" as referred to herein is meant to indicate the value calculated according to the above-mentioned formula (2). In formula (2), $\rho_0$ indicates the true density of the film, and $\rho$ indicates the density thereof (JIS P-8118). So far as the non-stretched material does not contain much air, the true density is nearly equal to the density of the non-stretched film.

The density of the laminate film for use in the invention generally falls between 0.5 and 1.2 g/cm$^3$. Films having more pores have a smaller density and have a larger porosity. Films having a larger porosity may have improved surface-reflecting characteristics.

[Light Reflector]

The light reflector of the invention is characterized in that it has the above-mentioned laminate film. The light reflector of the invention may be formed of the laminate film alone, or may comprise the laminate film and any other suitable material added thereto.

For example, the light reflector of the invention may have a structure that comprises a laminate of a substrate layer (A) and a thermoplastic resin-containing layer (B) and has an additional layer further laminated thereon. Concretely, it may have a structure constructed by laminating a thermoplastic resin-containing layer (B) on both faces of a substrate layer (A) ; or a structure constructed by laminating a protective layer (C) on one or both faces of a laminate of a substrate layer (A) and a thermoplastic resin-containing layer (B). Specifically, examples of the structure of the light reflector are (A)/(B), (B)/(A)/(C), (C)/(A)/(B), (A)/(B)/(C), (C)/(A)/(B)/(C), (B)/(A)/(B)/(C), (C)/(B)/(A)/(B)/(C).

The whole ray reflectance R of the light reflector of the invention means a mean value of the reflectance measured at each wavelength within a wavelength range of from 400 to 700 nm according to the method described in JIS-Z8722, condition d. The whole ray reflectance R of the light reflector of the invention is at least 95%, preferably at least 96%, more preferably from 97% to 100%. The light reflector of the invention is especially desirably as follows: The reflectance R1 thereof at a wavelength of 550 nm is preferably at least 97%, more preferably at least 98.5; and the reflectance R2 thereof at a wavelength of 450 nm is preferably at least 98%, more preferably at least 98.5%.

The scattering coefficient S, as defined by the above formula (1), of the light reflector of the invention is preferably at least 0.5, more preferably at least 0.6, even more preferably at least 0.8. The scattering coefficient means the degree of light scattering per the unit volume of pores, and this is in proportion to R1 and is in inverse proportion to the thickness $T_A$ of the substrate layer (A) and the porosity P. According to the invention, a large number of flat pores that are finer and more uniform may be formed in the substrate layer (A), and therefore the light reflector may have a desired brightness not requiring the increase in the thickness of the substrate layer (A) to any more than it needs.

The diffusive reflectance Rd of the light reflector is determined as follows, according to the method described in JIS Z-8722, condition d. Using a light trap, the regular reflection component is cut off, and the reflectance at a wavelength of from 400 to 700 nm is measured. The data are averaged, and the mean value is the diffusive reflectance Rd. Rd is preferably at least 93%, more preferably from 95 to 100%. The light reflector of the invention having a diffusive reflectance of at least 93% is favorable since a planar light source device that comprises the light reflector of the type is well protected from brightness unevenness.

The brightness of the light reflector of the invention may be determined according to the method mentioned below. The brightness of the light reflector of the invention is preferably at least 1380 cd/m$^2$, more preferably at least 1400 cd/m$^2$, even more preferably from 1420 cd/m$^2$ to 3000 cd/m$^2$, still more preferably from 1440 cd/m$^2$ to 2000 cd/m$^2$.

The surface strength of the light reflector of the invention is at least 250 g, preferably from 270 to 1000 g. The surface strength as referred to herein means the peeling load that is determined by sticking an adhesive tape having a width of 18 mm to the test surface of the light reflector and peeling it at a speed of 300 mm/min, as shown by the determination method mentioned below. The light reflector of the invention having a surface strength of at least 250 g is free from a problem of loosing or peeling thereof when it is stuck to a tabular material and shaped and worked variously.

The invention is described more concretely with reference to the following Examples, Comparative Examples and Test Examples. The material, its amount and ratio and the operation mentioned below may be suitably changed and modified not overstepping the sprit and the scope of the invention. Accordingly, the scope of the invention should not be limited to the Examples mentioned below. The materials used in the Examples are shown in Table 1.

Table 1

| Ingredient | Details |
|---|---|
| PP1 | propylene homopolymer [Nippon Polychem's Novatec PP:EA8] (MFR (230°C, 2.16 kg load) = 0.8 g/10 min), melting point (167°C, DSC peak temperature) |
| PP2 | propylene homopolymer [Nippon Polychem's Novatec PP:MA4] (MFR (230°C, 2.16 kg load) = 5 g/10 min), melting point (167°C, DSC peak temperature) |
| HDPE | high-density polyethylene [Nippon Polychem's Novatec HD:HJ360] (MFR (190°C, 2.16 kg load) = 5.5 g/10 min), melting point (134°C, DSC peak temperature) |
| $CaCO_3$ (a) | surface-treated precipitated calcium carbonate having a mean particle size of 0.15 μm (through electronic microscope) (surface treatment; according to the method described in Example 1 of JP-A 2002-363443) |
| $CaCO_3$ (b) | surface-treated precipitated calcium carbonate having a mean particle size of 0.3 μm (through electronic microscope) (surface treatment; according to the method described in Example 1 of JP-A 2002-363443) |
| $CaCO_3$ (c) | surface-treated precipitated calcium carbonate having a mean particle size of 0.5 μm (through electronic microscope) (surface treatment; according to the method described in Example 1 of JP-A 2002-363443) |
| $CaCO_3$ (d) | heavy calcium carbonate having a mean particle size of 1.8 μm (in terms of specific surface area) [Shiroishi Calcium's Soften #1800], having a specific surface area of 12,500 $cm^2$/g |
| $CaCO_3$ (e) | heavy calcium carbonate having a mean particle size of 0.89 μm (in terms of specific surface area) [Maruo Calcium's Caltex 5], having a specific surface area of 25,000 $cm^2$/g, not containing particles having a particle size of 5 μm or more |
| $CaCO_3$ (f) | heavy calcium carbonate having a mean particle size of 0.97 μm (in terms of specific surface area) [Maruo Calcium's Caltex 7], having a specific surface area of 23,000 $cm^2$/g, not containing particles having a particle size of 7 μm or more |
| $TiO_2$ | titanium dioxide having a mean particle size of 0.2 μm [Ishihara Sangyo's CR-60] |

(Example 1)

A composition (A) and a composition (B) prepared by mixing the ingredients shown in Table 1 in the ratio shown in Table 2 were separately melt-kneaded in three different extruders (two for the composition (B)) at 250°C. Next, these were fed to one co-extrusion die, in which (B) was laminated on both faces of (A) , and sheetwise extruded out and cooled to about 60°C with a chill roll to obtain a laminate of (B)/(A)/(B).

The laminate was re-heated at 145°C, then stretched in the machine direction thereof by utilizing the peripheral speed difference between a number of rolls, again re-heated up to about 150°C, and stretched in the cross direction thereof in a tenter. Next, this was annealed at 160°C and then cooled to 60°C, and its edges were trimmed away to give a three-layered laminate film. The draw ratio in the machine direction and in the cross direction, and the thickness of each layer are shown in Table 2. The laminate film is used as a light reflector.

(Examples 2 to 5)

The ingredients shown in Table 1 were mixed in the ratio shown in Table 2 to prepare a composition (A), and this was melt-kneaded in an extruder at 250°C. Then, this was sheetwise extruded out, and cooled to about 60°C with a chill roll to obtain a sheet. The sheet was re-heated at 145°C, and the stretched in the machine direction by utilizing the peripheral speed difference between a number of rolls.

The ingredients shown in Table 1 were mixed in the ratio shown in Table 2 to prepare a composition (B). This was melt-kneaded in two extruders, and then extruded out onto the stretched sheet previously prepared in the above, through a die in which (B) was laminated on both faces of the stretched sheet to give a laminate of (B)/(A)/(B). Next, the laminate was re-heated at 160°C and stretched in the cross direction in a tenter.

Next, this was annealed at 160°C and then cooled to 60°C, and its edges were trimmed away to give a three-layered laminate film. The draw ratio in the machine direction and in the cross direction, and the thickness of each layer are shown in Table 2. The laminate film is used as a light reflector.

(Comparative Example 1)

The substrate layer (A) in Example 1 is used as a light reflector.

(Comparative Example 2)

The laminate obtained in Example 5 in JP-A 2002-31704 is used as a light reflector.

(Comparative Example 3)

The laminate obtained in Example 6 in JP-A 2002-31704 is used as a light reflector.

(Comparative Example 4)

The three-layer film obtained in Example 3 in WO03/014778 is used as a light reflector.

(Test Methods)

The light reflectors of Examples 1 to 5 and Comparative Examples 1 to 4 were tested as follows:

1) Whole ray reflectance R:

A mean value of the reflectance of the light reflector, measured at each wavelength within a wavelength range of from 400 to 700 nm according to the method described in JIS-Z8722, condition d, is the whole ray reflectance R thereof.

2) Reflectance R1, R2:

The reflectance of the light reflector, measured at a wavelength of 550 nm according to the method described in JIS-Z8722, condition d, is R1; and the reflectance thereof at a wavelength of 450 nm is R2.

3) Diffusive reflectance Rd:

According to the method described in JIS Z-8722, condition d, and using a light trap, the regular reflection component of the light reflector is cut off, and the reflectance thereof at a wavelength of from 400 to 700 nm is measured. The data are averaged, and the mean value is the diffusive reflectance Rd of the light reflector.

4) Brightness:

The light reflector is set at the position 11 of the 14-inches-size planar light source device illustrated in Fig. 2, and an inverter unit by Harrison is connected to the cold-cathode lamp 15. A tubular current of 6 mA at 12 V is applied to the cold-cathode lamp, and the device is switched on for lighting. After 3 hours, this is evaluated in the following matter.
The brightness is as follows: A brightness meter by Topcon (trade name, BM-7). The distance between the part at which the brightness is determined and the planar light source device relative to the normal line direction of the planar light source device is 50 cm. The brightness is measured at 9 points in all, and the data are averaged.

5) Porosity:

According to JIS-P8118, the density $\rho$ and the true density $\rho 0$ of the laminate film are determined, and the porosity is obtained through calculation according to the equation (2) for porosity.

6) Surface strength:

The surface strength is determined as follows: An adhesive tape (by Nichiban, trade name; Cellotape®) having a width of 18 mm is airtightly stuck to the test surface of the light reflector to a length of at least 100 mm, and the last 10 mm of the tape is left as such not stuck to it. The sample is cut into a piece having a width of 20 mm. A tensile tester (by Orientec, trade name: RTM-250) with a load cell of 5 kg is used. The chuck-to-chuck distance is 1 cm. The non-stuck part of the adhesive tape and a part of the light reflector with no adhesive tape stuck thereto are separately sandwiched between the upper and lower chucks. This is pulled at a speed of 300 mm/min, and the load in the stable part of the chart is read. Each sample is tested three times, and the data are averaged to obtain the surface strength of the light reflector.

7) Workability:

The light reflector obtained in Examples and Comparative Examples is dry-laminated on a stainless plate (SUS #5052, thickness 0.6 mm), using an adhesive (by Toyo Morton, trade name: TM590) and a curing agent (by Toyo Morton, trade name: CAT56) to prepare a sample. A protective film (by Sekisui Chemical Industry, Product Lot Number: #6312B) is stuck to the light reflector of the sample. Using a pressing machine, the sample is folded twice, each at an angle of 90° in the opposite directions in such a manner that the light reflector side could form a valley and a mountain, and then the protective film is peeled off. The light reflector is evaluated as follows:

O: The light reflector did neither loose nor peel from the stainless plate, and the surface of the reflector did not peel.
×: The light reflector loosed or peeled from the stainless plate, and the surface of the reflector peeled.

(Results)

The test results are shown in Table 2.

Table 2

| | Composition (wt.%) of Substrate Layer (A) | | | | Composition (wt.%) of Surface and Back Layers (B) (surface/back) | | | | Composition (wt.%) of Protective Layers (C) (surface/back) | | | | Layer Thickness (µm) B/A/B C/B/A/B/C | Draw Ratio | | Areal Draw Ratio of Substrate Layer (A) MD×CD |
|---|---|---|---|---|---|---|---|---|---|---|---|---|---|---|---|---|
| | PP1 | HDPE | CaCO₃ | TiO₂ | PP2 | HDPE | CaCO₃ | TiO₂ | PP2 | HDPE | CaCO₃ | TiO₂ | | machine direction MD | cross direction CD | |
| Example 1 | 61 | 4 | 30 (f) | 5 | 97 | - | 2.5 (f) | 0.5 | - | - | - | - | 3/194/3 | 4.5 | 8.8 | 39.6 |
| Example 2 | 61 | 4 | 30 (f) | 5 | 50 | 50 | - | - | - | - | - | - | 14/172/14 | 4.5 | 8.5 | 38.3 |
| Example 3 | 51 | 4 | 40 (a) | 5 | 50 | 50 | - | - | - | - | - | - | 14/196/14 | 4.5 | 8.5 | 38.3 |
| Example 4 | 51 | 4 | 40 (b) | 5 | 50 | 50 | - | - | - | - | - | - | 14/196/14 | 4.5 | 8.5 | 38.3 |
| Example 5 | 51 | 4 | 40 (c) | 5 | 50 | 50 | - | - | - | - | - | - | 14/196/14 | 4.5 | 8.5 | 38.3 |
| Comparative Example 1 | 61 | 4 | 30 (f) | 5 | - | - | - | - | - | - | - | - | 200 | 4.5 | 8.7 | 39.2 |
| Comparative Example 2 | 75 | 10 | 15 (d) | - | 97 | - | 3 (d) | - | 55 | - | 45 (d) | - | 40/1/118/1/40 | 5 | 7.5 | 37.5 |
| Comparative Example 3 | 62 | 10 | 25 (e) | 3 | 70 | - | 29.5 (e) | 0.5 | - | - | - | - | 0.5/134/0.5 | 5 | 9 | 45.0 |
| Comparative Example 4 | 54 | 10 | 30 (f) | 6 | 70 | - | 29.5 (f) | 0.5 | - | - | - | - | 0.5/169/0.5 | 3.8 | 8.2 | 31.2 |

Table 2 (continued)

| | Whole Ray Reflectance R (%) | 550 nm Reflectance R1 (%) | 450 nm Reflectance R2 (%) | Diffusive Reflectance Rd (%) | Brightness (cd/m$^2$) | 550 nm Scattering Coefficient S | Porosity P (%) | Surface Strength | | Workability | |
|---|---|---|---|---|---|---|---|---|---|---|---|
| | | | | | | | | Reflector Side (g) | Opposite Side to Reflector (g) | Reflector Side | Opposite Side to Reflector |
| Example 1 | 96.3 | 97.3 | 98.1 | 93.2 | 1380 | 0.38 | 48 | 320 | 320 | O | O |
| Example 2 | 96.2 | 97.3 | 98.0 | 94.1 | 1380 | 0.46 | 39 | 460 | 460 | O | O |
| Example 3 | 97.9 | 99.0 | 100.3 | 96.5 | 1450 | 1.10 | 46 | 460 | 460 | O | O |
| Example 4 | 97.8 | 98.8 | 100.1 | 96.5 | 1440 | 0.91 | 46 | 460 | 460 | O | O |
| Example 5 | 97.1 | 98.1 | 98.9 | 95.8 | 1400 | 0.53 | 50 | 460 | 460 | O | O |
| Comparative Example 1 | 96.3 | 97.3 | 98.1 | 94.9 | 1380 | 0.37 | 49 | 200 | 200 | × | × |
| Comparative Example 2 | 92.1 | 94.5 | 96.0 | 91.5 | 1220 | 0.22 | 31 | 400 | 400 | O | O |
| Comparative Example 3 | 95.5 | 96.5 | 97.0 | 95.0 | 1360 | 0.44 | 47 | 200 | 200 | × | × |
| Comparative Example 4 | 95.8 | 96.8 | 97.4 | 95.3 | 1350 | 0.42 | 43 | 200 | 200 | × | × |

INDUSTRIAL APPLICABILITY

The light reflector of the invention has good optical properties and, in addition, it has good workability in that, when stuck to various plates and shaped, it hardly looses, drops and peels from the substrate plates. In particular, the invention provides a light reflector having good brightness with no brightness unevenness, and it provides a high-brightness light reflector. Accordingly, the invention is applicable to industrial production of light reflectors and planar light source devices, and it is an industrially useful invention.

**Claims**

1. A light reflector having a laminate film that comprises

   a substrate layer (A) containing a thermoplastic resin and a filler and stretch in at least one direction to have an areal draw ratio of from 1.3 to 80 times and
   a thermoplastic resin-containing layer (B),
   wherein the light reflector has a whole ray reflectance of at least 95% and a surface strength of at least 250 g.

2. The light reflector as claimed in claim 1, wherein the thermoplastic resin in the substrate layer (A) is a

3. The light reflector as claimed in claim 1, wherein the thermoplastic resin in the layer (B) is a polyolefin-based resin.

4. The light reflector as claimed in claim 1, wherein the thermoplastic resin in the substrate layer (A) and the thermoplastic resin in the layer (B) are both polyolefin-based resins.

5. The light reflector as claimed in any one of claims 1 to 4, wherein the filler concentration in the substrate layer (A) is from 5 to 75% by weight.

6. The light reflector as claimed in claim 5, wherein the filler is an inorganic filler having a mean particle size of from 0.05 to 1.5 $\mu$m and/or an organic filler having a mean dispersed particle size of from 0.05 to 1.5 $\mu$m.

7. The light reflector as claimed in any one of claims 1 to 6, wherein the filler in the substrate layer (A) is a surface-treated inorganic filler.

8. The light reflector as claimed in any one of claims 1 to 7, wherein the thickness of the substrate layer (A) is from 30 to 500 $\mu$m.

9. The light reflector as claimed in any one of claims 1 to 8, wherein the thickness of the layer (B) is at least 2 $\mu$m.

10. The light reflector as claimed in any one of claims 1 to 9, wherein the filler concentration in the layer (B) is less than 5% by weight.

11. The light reflector as claimed in any one of claims 1 to 10, wherein the layer (B) contains from 40 to 60% by weight of a propylene-based resin and from 40 to 60% by weight of a high-density polyethylene.

12. The light reflector as claimed in any one of claims 1 to 11, wherein the layer (B) is stretched in at least one direction.

13. The light reflector as claimed in any one of claims 1 to 12, which additionally has a protective layer (C).

14. The light reflector as claimed in any one of claims 1 to 13, wherein the scattering coefficient, S, represented by the equation (1), of the light reflector is at least 0.5:

$$\text{Scattering Coefficient } S = (100 \times R1)/[(100 - R1) \times T_A \times P]$$
$$(1)$$

wherein R1 represents the reflectance of the light reflector at a wavelength of 550 nm; $T_A$ represents the thickness of the substrate layer (A) [ unit, $\mu$m]; and P represents the porosity [unit, %] represented by the equation (2):

$$\text{Porosity P} = [ (\rho 0 - \rho)/\rho 0] \times 100 \qquad (2)$$

wherein $\rho 0$ indicates the true density of the laminate film, and $\rho$ indicates the density of the laminate film.

**15.** The light reflector as claimed in claim 14, wherein the porosity of the laminate film is from 15 to 60%.

**16.** The light reflector as claimed in any one of claims 1 to 15, which has a brightness of at least 1380 cd/m$^2$.

**17.** The light reflector as claimed in any one of claims 1 to 16, wherein the reflectance R2 of the light reflector at a wavelength of 450 nm is at least 98%.

**18.** The light reflector as claimed in any one of claims 1 to 17, wherein the diffusive reflectance Rd of the light reflector is at least 93%.

**19.** The light reflector as claimed in any one of claims 1 to 18, wherein the surface strength of the light reflector is from 270 to 1000 g.

**20.** A planar light source device comprising the light reflector of any one of claims 1 to 19.

Fig.1

14

15

11

Fig.2

13

12

14

15

15

11

## INTERNATIONAL SEARCH REPORT

| | International application No. |
|---|---|
| | PCT/JP2004/008927 |

**A. CLASSIFICATION OF SUBJECT MATTER**
Int.Cl$^7$  G02B5/08, F21V8/00, G02F1/13357

According to International Patent Classification (IPC) or to both national classification and IPC

**B. FIELDS SEARCHED**

Minimum documentation searched (classification system followed by classification symbols)
Int.Cl$^7$  G02B5/08, F21V8/00, G02F1/13357

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2002/0015299 A1 (YUPO CORP.), 07 February, 2002 (07.02.02), | 1–8,10–15, 17–19 |
| A | Full text; all drawings & JP 2002-31704 A | 9,16 |
| Y | JP 63-161029 A (Toray Industries, Inc.), 04 July, 1988 (04.07.88), | 1–8,10–15, 17–19 |
| A | Full text; all drawings (Family: none) | 9,16 |
| A | EP 0724181 A2 (MITSUI TOATSU CHEMICALS, Inc.), 31 July, 1996 (31.07.96), Full text; all drawings & JP 8-262208 A          & SG 38923 A & US 5710856 A1          & KR 200200 B | 1–19 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 October, 2004 (04.10.04) | 19 October, 2004 (19.10.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| | International application No. |
|---|---|
| | PCT/JP2004/008927 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-30169 A  (Mitsui Chemicals,  Inc.),<br>31 January, 2002 (31.01.02),<br>Full text; all drawings<br>(Family: none) | 7 |

Form PCT/ISA/210 (continuation of second sheet) (January 2004)